(19) Europäisches Patentamt European Patent Office Office européen des brevets

(11) **EP 4 284 293 B1**

(12) **EUROPEAN PATENT SPECIFICATION**

(45) Date of publication and mention of the grant of the patent:
**12.02.2025 Bulletin 2025/07**

(21) Application number: **22719238.2**

(22) Date of filing: **25.03.2022**

(51) International Patent Classification (IPC):
*A61C 7/20* (2006.01)      *B21F 1/00* (2006.01)

(52) Cooperative Patent Classification (CPC):
**A61C 7/20; B21F 1/008; B21F 23/00**

(86) International application number:
**PCT/EP2022/058029**

(87) International publication number:
**WO 2022/200620 (29.09.2022 Gazette 2022/39)**

(54) **ORTHODONTIC WIRE BENDING DEVICE AND METHOD**

VORRICHTUNG UND VERFAHREN ZUM BIEGEN VON KIEFERORTHOPÄDISCHEN DRÄHTEN

DISPOSITIF ET PROCÉDÉ DE PLIAGE DE FIL ORTHODONTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Validation States:
**MA TN**

(30) Priority: **26.03.2021 EP 21305387**

(43) Date of publication of application:
**06.12.2023 Bulletin 2023/49**

(73) Proprietor: **Winnove Medical SAS**
**35510 Cesson-Sévigné (FR)**

(72) Inventor: **HARRABI, Firas**
**35700 Rennes (FR)**

(74) Representative: **Icosa**
**83 avenue Denfert-Rochereau**
**75014 Paris (FR)**

(56) References cited:
WO-A1-2019/235796      KR-A- 20200 074 640
US-A1- 2006 107 720      US-A1- 2017 312 808

## Description

### FIELD OF INVENTION

The present invention pertains to the field of robotic dentistry. In particular, the invention relates to an orthodontic archwire bending robot.

### BACKGROUND OF INVENTION

In the production of custom-made orthodontic appliances, such as orthodontic archwires, elevated precision and accuracy are essential.

In this context, orthodontic archwire bending robots allow to produce customize archwires with higher accuracy, and more rapidly, when compared to the manual archwire shaping performed by orthodontists.

In addition to ensuring precision and accuracy, the archwire manufacturing process should not create defects on the surface of the archwire. Defects negatively affect the mechanical properties of the wire and may lead to crack formation. Once the archwire is in place, the mechanical solicitation (due to biting, chewing...) and the acidic environment of the oral cavity may facilitate and accelerate crack propagation, thereby causing premature fracture of the archwire.

Most orthodontic archwire bending robots comprise at least one gripping tool for holding the wire to be bent in the desired shape.

In some instances, two gripping tools are provided, relatively moveable to each other, so as to hold and bend the wire at the same time.

In such systems, the friction between the fingers of the gripping tool and the wire may generate high local stress and surface defects.

Furthermore, an elevated pressure of the grippers on the wire may negatively affect the elasto-plastic properties of the wire.

In addition to the adverse effect on the wire, grippers are also associated with intrinsic limitations: over time, due to wear, the fingers of the gripping tools tend to move and to be spaced apart one from the other. Thus, the distance between the fingers and the force applied by the fingers on the wire to deviate from the nominal gripper stroke and gripping force, respectively, which ultimately leads to a loss of precision. This effect is more frequently observed at high bending angles.

Patent application KR20200074640A describes such a wire bending unit comprising a fixing portion with two fingers (also called jigs) for fixing the wire, and a pair of rotating bending bars for bending the wire.

Some attempts have been made to provide gripper-free orthodontic wire bending robots.

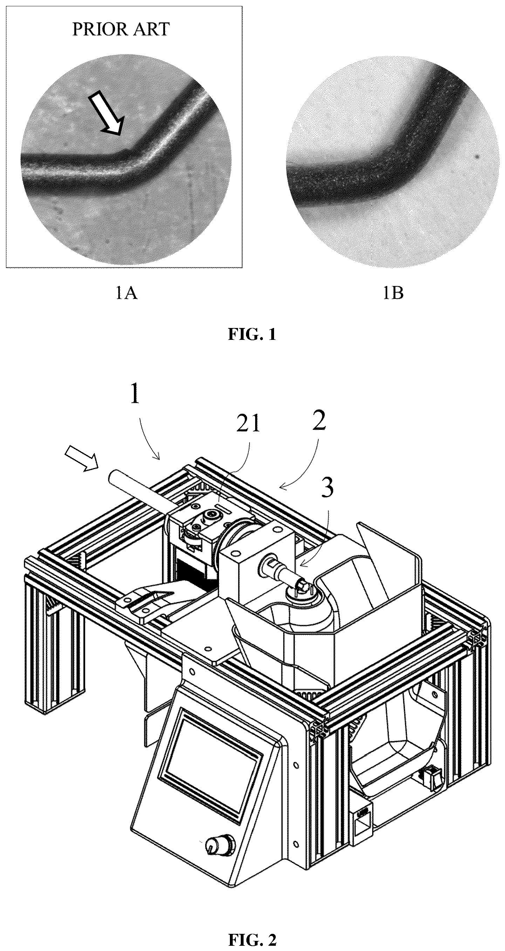

However, in most cases surface defects are still frequently observed, especially at the inside bend. **Figure 1A** illustrates a magnification of a bent portion of a wire in which surface defects (wrinkles) have been created in the inside bend.

Patent application US20170312808A1 describes such a gripper-free bending machine comprising a wire guide which includes a hole, and a rotatable outer portion in which the wire is bent.

The wire bending unit and the bending machine respectively described in patent applications KR20200074640A and US20170312808A1 have a similar configuration: in the former, the wire leaves the fixing unit before reaching the bending bars; in the latter, the wire leaves the wire guide before reaching the rotatable outer portion. In both devices, the center of rotation of the rotating bending bars/rotatable portion is located after the place of bending of the wire in the direction of wire delivery. US 2006/0107720 discloses a method and device for shaping an orthodontic archwire. WO 2019/235796 discloses an orthodontic wire bending device.

This configuration does not provide a sufficiently precise and rapid bending of the wire.

Therefore, there is a need for a bending robot for producing orthodontic archwire in an accurate and rapid manner, and which is resistant to fatigue wear.

### SUMMARY

It is an objective of the present invention to provide an orthodontic wire bending device according to claim 1, an orthodontic wire bending system according to claim 17 and a method of manufacturing an orthodontic archwire according to claim 19.

More in particular, the present invention aims to provide orthodontic archwires without surface defects, as illustrated in **figure 1B**, and with an improved mechanical behavior and durability, so as to avoid the premature fracture of the archwire - fatigue wear.

It is also an objective of the present invention to provide an orthodontic archwire bending robot of compact dimensions, which can be easily manufactured and installed in an orthodontist's office.

The present invention thus relates to an orthodontic wire bending device comprising:

- a wire guiding unit comprising a convoying system for driving the wire and an exit for delivering the wire, the wire guiding unit being configured to guide the wire in a first direction along a longitudinal axis through the exit, and
- a wire bending unit fed by the wire delivered by the exit, comprising at least one bending member, the at least one wire bending member being able to turn around a center of rotation in a first plane including the longitudinal axis, such that, when the wire comes out of the exit, a rotation of the at least one bending member around the center of rotation results in the bending of the wire proximate to the exit,

wherein the exit of the wire guiding unit is located, along the first direction, beyond the center of rotation.

The present invention allows to minimize the distance between the exit of the wire guiding unit and the bending member. Thus, for a given bending moment, the force applied by the bending member to the wire is maximized, resulting in a quicker, more efficient and precise bending of the wire. This also allows more precise three-dimensional bending of the wire as the case may be.

In one embodiment, the exit is a nozzle, preferably a removable nozzle. Advantageously, this embodiment allows to employ different nozzles having different cross-sections as needed.

A rotation of the at least one bending member of an angle α results in the bending of the wire of an angle β wherein the relationship between α and β is given by the following equation:

$$\tan(\beta) = \frac{sin(\alpha)}{\cos(\alpha) - \frac{d}{R}} \ ,$$

in which d is the distance between the center of rotation and the exit, and R is the distance between the center of rotation and the at least one wire bending member.

In one embodiment, the convoying system is capable of rotating about the longitudinal axis, so as to rotate the wire about the longitudinal axis. This feature allows three-dimensional bending of the wire. Moreover, it is possible to obtain the wire translation and rotation within a single system, thereby reducing the dimensions of the orthodontic wire bending device.

In one embodiment, the wire guiding unit comprises a tube configured to house and guide the wire.

In one embodiment, the tube comprises:

a. an external cover, preferably made up of a metal or alloy material and
b. an inner sheath, preferably made up of a medical grade thermoplastic elastomer.

Thus, the wire may be convoyed safely until the exit.

In one embodiment, the exit has an inner surface having an inner radius, an outer surface, and a bevel or round extending from the inner surface to outer surface, the bevel or round having a radius of curvature which is equal or greater than the inner radius, preferably equal or greater than the inner diameter. The presence of the bevel or round avoids the creation of surface defects in the inside bend of the wire. In an embodiment, the exit may have a circular cross-section and the radius of curvature of the round may be constant.

Alternatively, the exit may have a squared cross-section with at least two different rounds having two different radii of curvature. In this alternative embodiment, it is possible to select the preferred round with a simple rotation.

In one embodiment, the wire bending unit comprises a plate capable of rotating about an axis of rotation perpendicular to the longitudinal axis, wherein the at least one bending member protrudes from said rotating plate. The at least one bending member may be removable from the plate, so that different bending members may be used based on the wire characteristics and/or the archwire shape to be obtained.

In one embodiment, the wire guiding unit comprises a hollow body having a proximal end and a distal end, the hollow body being non-rotatably connected to the convoying system and being configured to receive, at its proximal end, the wire from the convoying system and to guide it along the first direction towards the wire bending unit. Thus, the wire advances inside the hollow body, and it is delivered to the exit, where it is exposed to the wire bending unit and it can be bent. In one embodiment, the hollow body is made up of a metal or alloy material which ensure a smooth advancement of the wire towards the exit, and prevent the onset of rotational frictions.

In one embodiment, the at least one wire bending members is a bending rod.

In one embodiment, the bending rod has a diameter which decreases along the protruding direction, preferably the rod comprises a first part of frustoconical shape and a second free part of cylindrical shape. The decreasing diameter allows to bend the wire so as to obtain any archwire shapes, while ensuring mechanical stability of the bending member.

In one embodiment, the wire bending unit further comprises a wire cutting member, preferably the wire cutting member is a rod having a sharp edge. In this embodiment, the wire cutting function is integrated in the wire bending unit, and there is no need to provide a separate wire cutting unit.

In one embodiment, the wire bending unit comprises one bending member, preferably capable of a rotation around a center of rotation of at least 180°, preferably at least 200°.

According to the invention, the wire bending unit comprises one bending member capable of a translation along a direction perpendicular to the first plane.

In one embodiment, the wire bending unit comprises one bending member and the convoying system is capable of a rotation about the longitudinal axis larger than 180°, preferably larger than 360°, so as to provide a second order bending.

In one embodiment, the wire bending unit comprises two bending members, preferably separated by an angular distance comprised between 10° and 170°, more preferably between 45° and 120°, even more preferably, equal to 90°. Within this embodiment, the convoying system may be capable of a rotation about the longitudinal axis of an angle comprised between 0° and 180°, so as to provide a second order bending.

The present invention also relates to an orthodontic wire bending system comprising:

a. an orthodontic wire bending device according to any one of claims 1-16, orthodontic wire bending device being responsive to control commands;

b. a driver assembly comprising a first driver operably connected to the wire guiding unit and configured to drive the wire in the guiding unit, and a second driver operably connected to the wire bending unit configured to drive in rotation the at least one bending member; and

c. a programmable controller configured to send control commands to the drivers of the driver assembly, so as to operate the orthodontic bending device.

Advantageously, the controller allows to operate the different units of the orthodontic wire bending device so as to obtain the desired archwire shape.

In one embodiment, the controller is configured to receive, as input, a file comprising a list of bending instructions and to operate the orthodontic wire bending device on the basis of the bending instructions in the file. The bending instructions are obtained from a digital model of the desired archwire shape.

In one embodiment, the system further comprising a wire detection unit for detecting the presence of the wire, said wire detection unit being preferably installed between the exit of the wire guiding unit and the wire bending unit.

In on embodiment, the system comprises a human-machine interface connected to the controller. The human-machine interface may be used to visualize a three-dimensional model of a subject dentition, and to create a digital model of a customized archwire. The system may comprise a processor configured to convert the digital model of the customized archwire into bending instructions.

The present invention also relates to a method of manufacturing an orthodontic archwire with the orthodontic wire bending device according to any one of claims 1-16, the method comprising:

- guiding the wire through the wire guiding unit in a first direction along the longitudinal axis, and delivering the wire out of the wire guiding unit through the exit;
- feeding the wire bending unit with the wire delivered from the exit;
- rotating the at least one wire bending member of a predefined angle $\alpha$ around the center of rotation so as to bend the wire.

This method allows to efficiently and accurately bend the wire, without introducing surface defects. Thus, the archwire which is obtained is more resistant to the mechanical solicitation and the acidic environment of the oral cavity.

## DEFINITIONS

In the present invention, the following terms have the following meanings:

- "**first order bend**" refers to the bend of the wire in a plane which includes the line of occlusion, such as for instance: canine eminence bend, molar offset bend, antirotation bend.

- "**second order bend**" refers to the bend of the wire in a plane which includes the occluso-gingival direction, such as for instance: tip beck bend, V bend, artistic positioning bend.

- "**bending angle**" is the angle between the bent portion of the wire, *i.e.*, the segment of wire downstream of the bending unit; and the x-axis of the wire, *i.e.*, the longitudinal axis of the wire before bending.

- "**inside bend**" refers to the side of the wire which is compressed during bending.

- "**outside bend**" refers to the side of the wire which is under tension during bending.

- "**center of rotation**" herein refers to center of the circular arc trajectory which can be covered by the bending member 31, 32.

## DETAILED DESCRIPTION

The following detailed description will be better understood when read in conjunction with the drawings. For the purpose of illustrating, the device is shown in the preferred embodiments. It should be understood, however that the application is not limited to the precise arrangements, structures, features, embodiments, and aspect shown. The drawings are not drawn to scale and are not intended to limit the scope of the claims to the embodiments depicted. Accordingly, it should be understood that where features mentioned in the appended claims are followed by reference signs, such signs are included solely for the purpose of enhancing the intelligibility of the claims and are in no way limiting on the scope of the claims.

The present invention relates to an orthodontic wire bending device 1 comprising a wire guiding unit 2, and a wire bending unit 3, as shown in **figures 2**, **3** and **7**.

In the following detailed description, the term "proximal" refers to an element, or the extremity of an element, which is closer to the wire guiding unit 1; whereas the term "distal" refers to an element, or an element extremity, which is closer to wire bending unit 3.

In the present invention, the wire guiding unit 2 comprises a convoying system 21 for driving the wire, and an exit 22 for delivering the wire. The wire guiding unit 2 is configured to guide the wire in a first direction (represented by the white arrow in **figure 2**) along a longitudinal axis x through the exit 22.

The wire bending unit 3 is configured to receive the wire w delivered by the exit of the wire guiding unit 2. Said wire bending unit 3 comprises at least one wire bending member 31, 32, which is capable of rotating around a center of rotation C in a first plane P including the longitudinal axis x. In other words, the axis of rotation passing through C of the bending member is perpendicular to the plane P, and C is on the longitudinal axis x.

When the wire comes out of the exit 22, a rotation of the at least one bending member 31, 32 around the center of rotation C results in the bending of the wire w.

The wire advances through the device in a stepwise manner from the wire guiding unit 2 towards the wire bending unit 3, along the longitudinal axis x. After an advancement step, the wire is bent at the wire bending unit 3 of a first bending angle β. At the next advancement step, the wire may be bent at the wire bending unit 3 of a second bending angle, and so on, until the desired archwire shape is obtained.

## THE DEVICE

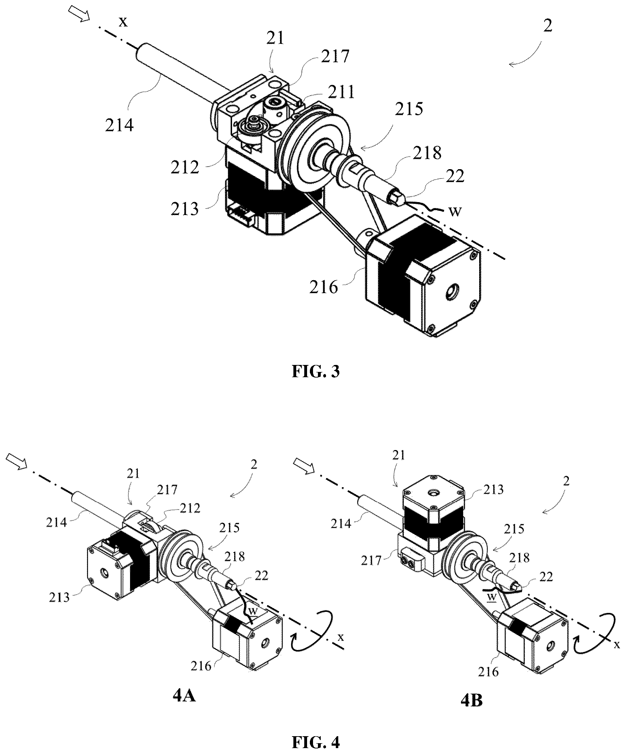

As illustrated in **figure 3**, the wire guiding unit 2 comprises a convoying system 21 for driving the wire w, and an exit 22 for delivering the wire.

In the wire guiding unit 2 illustrated in **figure 3**, the exit 22 is a nozzle. More in particular, the exit 22 is a nozzle having the shape of a composite solid: a proximal hexagonal prism and a distal cone; the hexagonal prism allowing to screw efficiently the nozzle on the device. In another embodiment, the exit 22 is a nozzle having a proximal cylindric shape and a distal cone; mounted with a pressure screw.

The convoying system 21 may comprise a pair of rollers, or gears, capable of rotating about an axis perpendicular to the longitudinal axis x, so that, when the wire w passes in between the two rollers, the rotation of the rollers results in the wire advancement. Several transmission systems may be used to drive the rollers, or gears, in rotation: for instance, a driver may be connected to a driving gear via a shaft, or the rollers may be belt-driven. Throughout this disclosure, drivers may be advantageously motors.

**Figure 3** represents a perspective view of the wire guiding unit 2 of the present invention according to one particular embodiment in which the convoying system 21 comprises a driving roller 211, a driven roller 212, a driver 213 connected to the driving roller 211 and configured to drive the rollers 211, 212 in rotation, and a tube 214 placed upstream of said rollers.

In some embodiments, the wire guiding unit 2 comprises a tube 214 configured to house and guide the wire; which may be installed upstream, downstream of the convoying system 21, or inside the convoying system 21.

In one embodiment, the convoying system 21 is capable of rotating about the longitudinal axis x, so as to rotate the wire w about the axis x.

One example of a rotatable convoying system 21 according to the present invention is illustrated in **figure 3**. In this embodiment, the convoying system 21 is capable of rotating about the longitudinal axis x, as it can be driven in rotation by a belt and pulley assembly 215, connected to a driver 216. The convoying system 21 therein illustrated comprises a support element 217 on which the rollers 211, 212 and the driver 213 are mounted. The support element 217 is connected to the belt and pulley assembly 215 and it has the twofold function of bearing the rollers 211, 212 and the driver 213, and permitting the rotation of the convoying system 21 about the axis x.

With such a rotatable convoying system 21 it is possible to simultaneously translate the wire along the longitudinal axis x, and rotate it about said axis.

If the convoying system 21 is driven in rotation about the longitudinal axis x during the wire advancement, consecutive bending angles β do not lie on the same bending plane. Thus, the rotation of the convoying system 21 allows to modify the bending plane at each advancement step of the wire, so as to provide a second order bending.

Advantageously, the total length to be covered by the wire is also reduced, because the wire translation and rotation are simultaneously obtained inside the wire guiding unit 2. With this embodiment, it is therefore possible to reduce the dimensions of the orthodontic wire bending device 1.

This would not be possible in a wire bending device in which the wire advancement and the wire rotation about the advancement direction are provided by separated components.

In one embodiment, the convoying system 21 is capable of rotating about the longitudinal axis x up to an angle of 180°, preferably of at least an angle of 180°, more preferably of at least an angle of 360°. A rotation angle equal or greater than 360° is especially interesting in a configuration with only one bending member. One example of this embodiment is illustrated in **figures 4A** and **4B**. In **figures 4A**, the wire guiding unit 2 is represented in a first position in which the rotation angle of the convoying system 21 is 90°, and in **figure 4B** it is represented in a second position in which the rotation angle is 180°.

As aforementioned, the wire guiding unit 2 may comprise a tube 214 configured to house and guide the wire. Preferably, the tube 214 is made up of a metal or a metal alloy; more preferably, a medical grade metal or metal alloy.

Examples of suitable metals or a metal alloys comprise: stainless steel, aluminum, cobalt-chrome alloy, titanium, nickel-titanium alloy (nitinol). Preferably, the external cover is made up of a medical grade metal or alloy material.

In one embodiment, the tube 214 comprises an external cover and an inner sheath.

In one embodiment, the external cover is made up of a metal or a metal alloy.

In one embodiment, the inner sheath is a polymeric sheath.

In one embodiment, the inner sheath is made up of a thermoplastic elastomer, such as for instance thermoplastic urethane (TPU) elastomer, thermoplastic elastic olefin (TEO), styrene-ethylene-butylene-styrene (SEBS), polyether-ester block copolymers (COPE), thermoplastic polyether block amide (PEBA), or a combination thereof.

Preferably, the thermoplastic elastomer is a medical grade thermoplastic elastomer.

The wire guiding unit 2 may further comprise a hollow body 218 having an external surface and an internal surface defining an internal hollow portion. The hollow body 218 extends, along a direction parallel to the longitudinal axis x, from the convoying system 21 to the exit 22 so that the wire exiting from the convoying system 21, it enters the hollow body 218, it advances inside the internal hollow portion, and it is delivered to the exit 22 of the wire guiding unit 2. Here, the wire is exposed to the wire bending unit 3 and it can be bent by the bending member 31, 32.

In one embodiment, the hollow body 218 is made up of a metal or alloy material.

Metal or alloy materials prevent rotational friction that might result from rotation of the wire relative to the inner surface of the hollow body 218. This friction may increase the risk of crack formation, and cause energy losses.

In the invention, the wire guiding unit 2 comprise an exit 22 which is located, along the first direction, beyond the center of rotation C of the bending member 31, 32.

This set-up presents several advantages:

- The distance between the bending member and the exit of the nozzle may be very small. This distance defines the characteristic length of shape change along the archwire. A small characteristic length allows to increase resolution of archwire shape and precision of archwire geometry.
- A small rotation angle of bending member corresponds to a large angular bending of wire, giving access to highly bent archwire structures.
- As bending member is very close to the exit of the nozzle, the momentum exerted on the wire is amplified - lever arm effect.

In one embodiment, the exit 22 is a nozzle, preferably a removable nozzle. This embodiment allows to employ different nozzles having different cross-sections. It is therefore possible to selected the nozzle whose cross-section is optimized to the cross-section of the wire being used and/or to the archwire shape to be obtained.

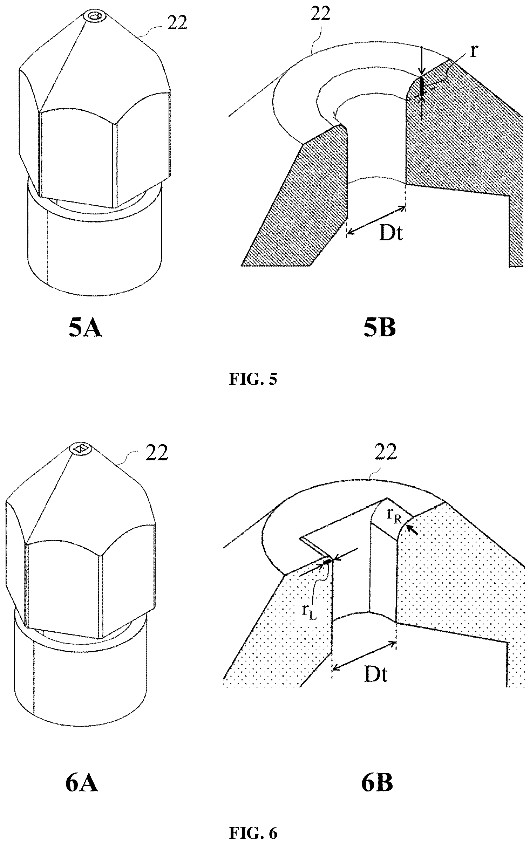

In one embodiment, the inner surface of the exit 22 has a circular or elliptical cross-section, as shown in **figure 5**.

In one embodiment, the exit 22 has an inner surface which is beveled or rounded, *i.e.* filleted on an exterior corner.

The presence of the bevel or round ensures that the wire, during bending, does not face sharp edges. Sharp edges may cause surface defects such as wrinkles in the inside bend of the wire w.

The exit 22 may have an inner surface having an inner diameter Dt, an outer surface. By having an inner surface which is beveled or rounded, it is meant that a bevel or rounded extends from the inner surface to the outer surface, with a radius of curvature r. Preferably, the radius of curvature r is equal or greater than the radius of the inner surface Dt/2, preferably equal or greater than the diameter of the inner surface Dt. Indeed, to avoid stress in bent wire, it is preferable that the radius of curvature of the bent wire be larger than the radius of the wire itself. When the radius of curvature of the bent wire is larger than the diameter of the wire itself, risk of breakage of archwire due to fatigue wear is reduced.

In one embodiment, the radius of curvature r of the round is constant.

Alternatively, the radius of curvature may be variable. For instance, the exit 22 of **figure 6** is a nozzle whose inner surface has a squared cross-section, in which two opposite sides are not beveled, *i.e.* they have a zero radius of curvature, and the other two opposite sides are rounded, *i.e.* they have a non-zero radius of curvature. The radiuses of curvature of the rounded sides may be identical or, as illustrated in **figure 6B**, may differ. In this particular embodiment, the radius of curvature $r_R$ of the right-side round is larger than the radius of curvature $r_L$ of the left side round.

Having a variable radius of curvature allows to obtain, with a single exit 22, different bend radius. For instance, with the nozzle of **figure 6**, it is possible to provide smaller bend radius by using the bending member 31, 32 which would bend the wire w toward the left side of the exit 22, and larger bend radius by using the bending member 31, 32, as it would bend the wire toward the right side of the exit 22.

In one embodiment, the inner surface of the exit 22 has a square or rectangular cross-section, as shown in **figure 6**.

If the cross-section of the inner surface is not circular, by inner diameter Dt it is meant the shortest dimension of the cross-section, for instance the length of one side for a square cross-section, or the minor axis for an elliptical cross-section.

In one embodiment, the exit 22 is tapered, *i.e.* it has an inner surface having a constant inner diameter Dt, and an outer surface having an outer diameter which decreases along the first direction. Examples of this embodiment are visible in **figures 5** and **6**. In these embodiments, the exit 22 has a hollow frustoconical shape.

The orthodontic wire bending device 1 according to the present invention further comprises a wire bending unit 3 configured to receive the wire w delivered by the exit 22 of the wire guiding unit 2 and comprising at least one bending member 31, 32.

In a first configuration, the wire bending unit 3 comprises two bending members 31, 32.

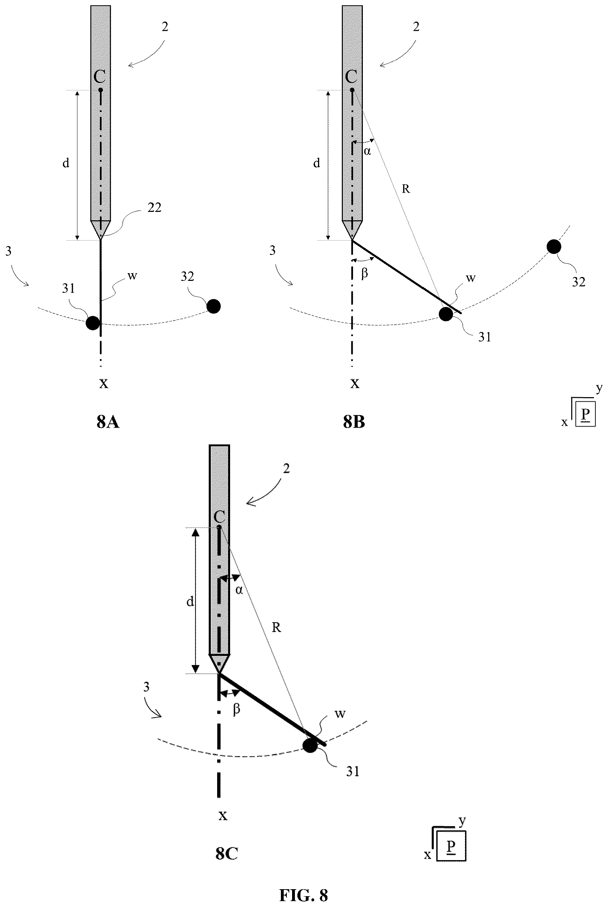

One example of this embodiment is shown in **figure 8A-B**

In a wire bending unit 3 comprising two bending members 31, 32, a rotation of the convoying system 21 of an angle comprised between 0° and 180° is sufficient to provide a second order bending. Such a small rotation of the two bending members 31, 32 allows to render the convoying system 21 less complex and more stable.

In a second configuration, the wire bending unit 3 may comprise only one bending member 31, 32. One example of this embodiment is shown in **figure 8C**.

In a wire bending unit 3 comprising only one bending member 31, 32, the convoying system 21 is preferably capable of a rotation larger than 180°, and more preferably larger than 360°. Such a large rotation advantageously allows to access totally the 3D space for all orientations of the archwire under formation. Therefore, second order bending becomes more accessible.

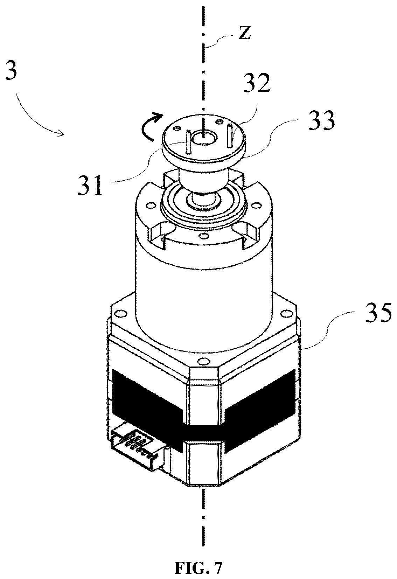

The wire bending unit 3 of the first configuration is better shown in **figure 7**. In this particular embodiment, the two bending members 31, 32 may be mounted on the same support capable of rotating around the center of rotation C. Having the bending members 31, 32 mounted on the same support allows to reduce the dimensions of the bending unit 3.Alternatively, the two bending members 31, 32 may be mounted on two distinct supports.

The support on which the at least one bending member 31, 32 is mounted, may be driven in rotation by a driver 35, as shown in **figure 7**.

In one embodiment, the support is a plate 33.

In the embodiment illustrated in **figure 7**, the bending members 31, 32 are rods perpendicularly protruding from the plate 33.

In one embodiment of the first configuration, the angular distance between the two bending members 31, 32 is comprised between 10° and 170°. Preferably, the angular distance between the two bending members 31, 32 is comprised between 45° and 120°; more preferably, it is equal to 90°.

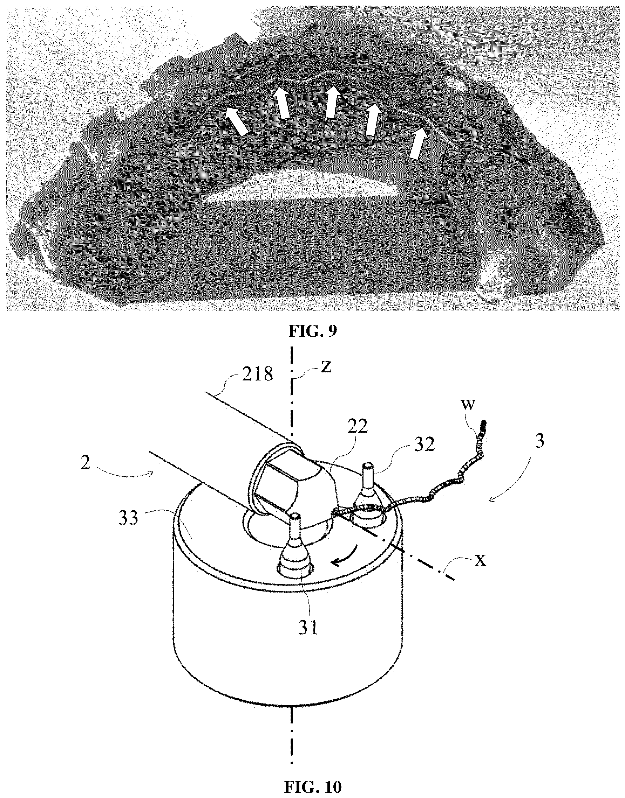

Advantageously, the combination of: (i) the angular distances between the bending members 31, 32 and (ii) the diameter of said bending members 31, 32, allows to obtain an archwire which reproduces the shape of the interproximal space, indicated by the white arrows in **figure 9**. Indeed, the contour of the teeth comprises a series of concavities and convexities which are smooth on the surface of the teeth. In the interproximal spaces, such concavities and convexities become harsh, and the contour of the teeth displays sharper angles. Most archwire reproduce the contour of each tooth with sufficient fidelity, but they are unable to fit inside the interproximal spaces, because of the difficulty of obtaining such sharp angles with the conventional archwire manufacturing process. As it can be appreciated in **figure 9**, the archwire obtained with the present invention is a three-dimensional archwire.

Inversely, in the present invention, the angular distance between the bending members 31, 32 and their shape allows to accurately reproduce such interproximal spaces, without creating surface defects (such as wrinkles) on the wire w.

By providing two bending members 31, 32 it is possible to bend the wire of large bending angles β, while reducing the angular displacements α of the bending members 31, 32 and the number of degrees of freedom (DOFs) of the bending unit 3. Advantageously, by limiting the number of DOFs it is possible to reduce the complexity and the cost of the drivers associated to the bending unit 3. Furthermore, less DOFs generate less disturbances (such as backlashes, which may negatively affect the stability of the bending unit 3) and make it easier to control the bending force.

The reference position of the plate 33 may be defined as the position in which the two wire bending members 31, 32 are at the same distance from the exit 22.

The wire bending unit 3 of the second configuration comprises only one bending member 31, 32 (for instance, only the first bending member 31).

In this case, a larger rotation (*e.g.*, a whole clockwise rotation, depending on the desired final shape of the wire w) of the bending member 31 may be necessary in order to bend the wire w in a direction opposite to the direction of the preceding bending.

In addition, the bending unit 3 may be configured to ensure the translation of the bending member 31 in a direction perpendicular to the plane of the rotation (*e.g.*, in a vertical direction for a horizontal plane of rotation). Advantageously, this embodiment allows to bend a first side of the wire, then to displace the bending member 31 away from the bent side, and displace it in proximity of the other side of the wire w, along a trajectory which is shorter than a whole rotation. In other words, this embodiment allows to shorten the trajectory of the bending member 31 between the first side and the other side of the wire w (and, accordingly, to provide a faster bending of the wire w) by providing a bending unit 3 which has a higher number of degrees of freedom (DOFs). In particular, in this case the bending unit 3 has two DOFs so as to ensure: (i) the rotation around the center C and (ii) the translation, for instance along a vertical direction, of the bending member 31. The reference position of the plate 33 may be defined as the position in which said bending member 31, 32 faces the exit 22.

In both configurations, the plate 33 is capable of rotating around a vertical axis z which is perpendicular to the longitudinal axis, and which includes the center of rotation. The bending member 31, 32 may be mounted so that it protrudes from a surface of the plate 33. Thus, a rotation of the plate about the vertical axis results in the rotation of the bending member 31, 32 around the center of rotation C. One example of this embodiment is illustrated in **figure 2**. In this embodiment, two wire bending members 31, 32 are provided as cylindrical rods which protrude perpendicularly from the plate.

In one embodiment, the plate 33 is capable of rotating about the vertical axis z of an angle up to 180°.

In one embodiment, the plate 33 is capable of a clockwise rotation up to 90° and a counterclockwise rotation up to 90°, from the reference position.

As aforementioned, the first plane P includes the longitudinal axis x.

The plane P is better shown in **figure 8**, which illustrates a simplified top view of the wire guiding unit 2 and the wire bending unit 3 of the present invention on the plane P. The angles α and β, the distance R between the center of rotation C and the wire bending members 31, 32, and the distance d between the center of rotation C and the exit are also represented.

As shown in shown in **figure 8**, when the wire w comes out of the exit 22, a rotation of at least one of the bending members 31, 32 around the center of rotation C results in the bending of the wire w.

More in particular, the wire w advances through the device in a stepwise manner from the wire guiding unit 2 towards the wire bending unit 3, along the longitudinal axis x. After an advancement step, the wire w is bent at the wire bending unit 3. Indeed, the rotation of the wire bending member 31, 32 of an angle α results in the bending of the wire of a bending angle β, and the relationship between the angles α and β is given by equation e1:

$$\tan(\beta) = \frac{sin(\alpha)}{\cos(\alpha) - \frac{d}{R}} \quad (e1)$$

By bending angle β, it is meant the angle between the longitudinal axis x and the bent portion of the wire, which has as vertex the exit of the wire guiding unit 1. Actually, wire bending is a sum of elastic deformation and plastic deformation, only the latter remaining after elastic recovery when bending member is withdrawn. Equation (e1) holds true as far as bending member is in contact with the wire: when bending member applies a force onto the wire; and when the wire is recovering elastically while the bending wire is withdrawn. When the bending member loses contact with the wire during withdrawal, angle β of bending is defined with the angle α related to the position of the bending member at this instant. So as to reach a bending angle β for the wire, bending member has to reach an angle larger than angle α defined by equation (e1). Equation (e1) corresponds to the geometry of bend after elastic recovery.

At the next advancement step, the wire may be bent at the wire bending unit 3 of a second bending angle, and so on, until the desired archwire shape is obtained.

As shown in **figure 8**, in the present invention, the exit 22 of the wire guiding unit 2 is located, along the first direction, beyond the center of rotation C.

Therefore, according to a coordinate system originating in the center of rotation C, and having as horizontal axis the longitudinal axis x, the abscissa of the exit 22 is positive.

Advantageously, this embodiment allows to minimize the distance between the exit 22 of the wire guiding unit 2 and the bending member 31, 32. Thus, for a given bending moment, the force applied by the bending member 31, 32 to the wire w is maximized.

The presence of two bending members 31, 32 in the first configuration allows to obtain large bending angles β with small angular displacements α of the bending members 31, 32. In the example illustrated in **figure 8**, the bending members 31, 32 are rotated in a counterclockwise manner to bend the wire and pass from **figure 8A** to **figure 8B**, so that the wire can be bent by the first bending member 31. From the configuration of **figure 8B**, to bend the wire in the opposite direction, it is sufficient to rotate the bending members 31, 32 in a clockwise manner, so as to bend the wire with the second bending member 32.

As aforementioned, the bending member 31, 32 is able to turn around a center of rotation C in the first plane P. In other words, the axis of rotation passing through C of the bending member is perpendicular to the plane P and preferably, center of rotation C is on the longitudinal axis x. Advantageously, having the rotation of the bending member 31, 32 in the plane P, which includes the longitudinal axis x, allows to reduce the dimensions of the wire bending unit 3. Furthermore, it allows to bend the wire w more rapidly, when compared to a coaxial bending unit, *i.e.* a bending unit in which the bending member rotates in a plane perpendicular to the plane in which the longitudinal axis lies.

Indeed, a coaxial bending unit would require a large distance between the center of rotation C and the bending member 31, 32, because the wire guiding unit 2 indeed would act as a physical obstacle, precluding the possibility to have the bending member proximate to the exit 22.

A large distance between the center of rotation C and the bending member 31, 32, should be avoided because (i) the bending unit 3, and hence the orthodontic wire bending device 1, would occupy a large volume and (ii) the bending member 31, 32 would require more time to reach the wire to be bent.

The rotation of the support of the bending unit 3, allows to move the wire bending member 31, 32 along a circular arc trajectory. In **figure 8**, the dashed line represents a portion of the trajectory which can be covered by the bending members 31, 32.

The diameter of the bending member 31, 32 is comprised between 0,1 mm and 100 mm, preferably between 0,1 mm and 10 mm.

Preferably, the diameter of the bending member 31, 32 is at least 0,3 mm.

In one embodiment, the diameter of the bending member 31, 32 is comprised between 0,3 mm and 5 mm.

Such diameters allow to obtain small inside bend radius, which are especially needed to reproduce the contour of the interproximal space *i.e.*, the space between adjacent teeth in a dental arch.

In one embodiment, the bending member 31, 32 has a conical shape.

In one embodiment, the bending member 31, 32 has a cylindrical shape.

In one embodiment, the bending member 31, 32 has the shape of a composite solid. The edges shared by adjacent solids may be beveled, as illustrated for instance in **figure 10**.

The decreasing diameter allows to provide a bending member 31, 32 which has a smaller diameter at its free end, and which has a larger diameter at its base. Advantageously, this embodiment allows to obtain all the relevant archwire shapes, while ensuring mechanical stability to the bending member 31, 32, due to the larger base. Besides, centering, effort transfer from device to bending member, stability of geometry are improved with a larger base. This specific structure allows a better distribution of bending moment and limit the deflection of the bending member on one hand and limits misalignments, parallelism defects or contact defects between the bending member and the wire.

In one embodiment, the two bending members 31, 32 have the same shape.

In one embodiment, the two bending members 31, 32 have different shapes.

In the examples illustrated in **figure 10**, the bending members 31, 32 protrude from a rotating plate 33, and their diameter decreases along the protruding direction. More in particular, these bending members 31, 32 have the shape of a composite solid comprising, along a direction protruding from the rotating plate 33: a first cylinder, a truncated cone, and a second cylinder, with a diameter smaller than that of the first cylinder.

In one embodiment, the bending member 31, 32 is not detachable from the rotating support. For instance, it may have an extremity which is embedded in the rotating support, it may be integrally manufactured with the rotating support or it may be attached to it.

In one embodiment, the bending member 31, 32 is removable, *i.e.*, it can be detached from the rotating support. For instance, they may have an extremity which is screwed, or snap-fitted in the rotating support; or they may be mounted on the rotating support with any other reversible attachment method.

Advantageously, this embodiment allows to remove and replace the bending members 31, 32. Different bending members 31, 32 having different shapes can be used. Of note, the types and number of final archwire shape which can be obtained depends on the shape of the bending members 31, 32. Therefore, with this embodiment it is possible to use the same orthodontic bending device 1 for manufacturing a wide number of archwire: it is sufficient to mount the bending member 31, 32 whose shape is optimized for the archwire to be manufactured.

In one embodiment, the present bending device further comprises a wire cutting member 34 for cutting the wire.

In an embodiment, the wire cutting member is mounted on an articulated arm able to come in contact with the wire w at the exit 22 of the wire guiding unit 2.

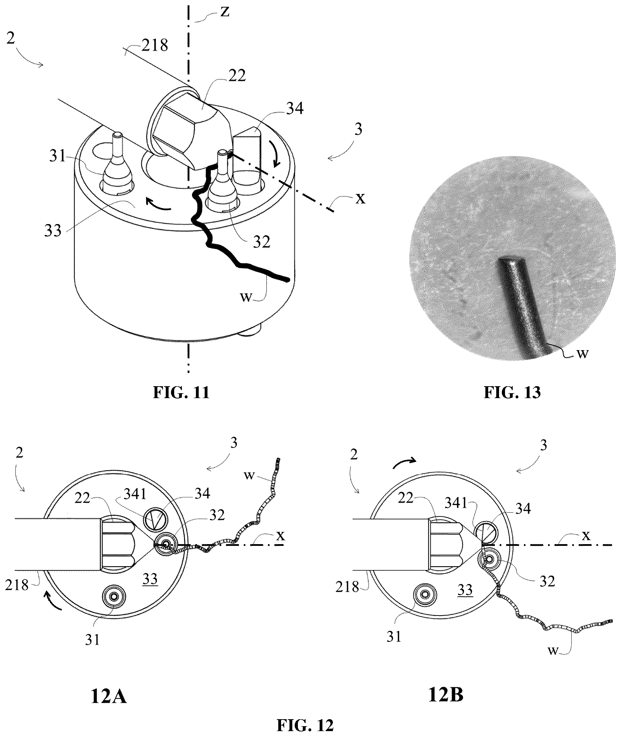

In another embodiment, the wire bending members 31, 32 and the wire cutting member 34 are mounted on the same support. More preferably, they are mounted on a rotating plate 33 so that they protrude from a surface of the rotating plate 33, as shown in **figure 11**.

In one embodiment, the cutting member 34 and the wire bending members 31, 32 perpendicularly protrude from the rotating plate 33.

For efficiently cutting the wire, the cutting member 34 may be made of a material having a high hardness. For instance, it may be made of hardened steel, high speed steel (HSS) or tungsten carbide.

In one embodiment, the cutting member 34 has a flat surface 341 provided with a sharp edge for cutting the wire. In one embodiment, the cutting member is capable of rotating around the center of rotation C, and the flat surface 341 is configured to be tangential to the exit 22 when the cutting member lies on the longitudinal axis.

In one embodiment, the wire cutting member 34 is not equidistant to the two bending rods. Preferably, the wire cutting member 34 is at an angular distance larger than 90° from the first bending member 31, and at an angular distance smaller than 45° from the second bending member 32, or vice-versa. One example of this embodiment is illustrated in **figure 11**.

Having the wire cutting member 34 in proximity of one of the bending members 31, 32 allows to cut the wire right after the last bending operation. Moreover, a small rotation of the wire cutting member 34 is sufficient to cut the wire due to (i) the proximity of the cutting member 34 with one of the bending members 31, 32, combined with (ii) the presence of a flat surface 341 which is tangential to the exit 22 when the cutting member 34 lies on the longitudinal axis.

In one embodiment, the rotation of the cutting member 34 needed to cut the wire is smaller than 20°; preferably, smaller than 15°.

## THE SYSTEM

The present invention also relates to an orthodontic wire bending system comprising:

a. an orthodontic wire bending device 1 according to any one of the embodiments described hereabove, the orthodontic wire bending device 1 being responsive to control commands;

b. a driver assembly comprising a first driver 213 operably connected to the wire guiding unit 2 and configured to drive the wire in the guiding unit, and a second driver 35 operably connected to the wire bending unit 3 configured to drive in rotation the at least one bending member 32, 33; and

c. a programmable controller configured to send control commands to the drivers of the driver assembly, so as to operate the orthodontic bending device 1.

In one embodiment, the orthodontic wire bending system further comprises a wire detection unit for detecting the presence of the wire.

In one embodiment, the wire detection unit is installed between the wire guiding unit 2 and the wire bending unit 3. Preferably, the wire detection unit is installed between the exit 22 and the wire bending unit 3.

In one embodiment, the wire detection unit comprises a camera.

In one embodiment, the wire detection unit comprises an electrical circuit and a sensor for measuring the electrical current along said electrical circuit, so as to detect electrical current variations due to the presence or absence of the wire.

In one embodiment, the programmable controller of the orthodontic wire bending system comprises the hardware and software for controlling the drivers which drive the wire guiding unit 2 and the wire bending unit 3, *i.e.* the drivers 213, 35. The programmable controller may further control a driver 216 for rotating the convoying system 21.

In one embodiment, the programmable controller receives, as input, a file comprising a list of bending instructions. The programmable controller operates the bending device 1 on the basis of the bending instructions in the file.

In one embodiment, the programmable controller is configured to receive the file with the bending instructions from an external source.

In on embodiment, the orthodontic bending device comprises a human-machine interface connected to the programmable controller, and the human-machine interface comprises a display and an input device, as shown in **figure 2**.

In one embodiment, the programmable controller comprises a processor configured to execute a computer program for generating said bending instructions, and a storage medium for storing a file comprising said instructions.

The processor may be configured to receive radiological images representing the dentition of a subject, and the computer program may be configured to:

- generate a digital representation of the dentition of the subject, on the basis of the radiological images;
- receive a user input from the human-machine interface;
- generate a three-dimensional model of a custom orthodontic archwire, on the basis of the three-dimensional model of the subject dentition and the user input; and

- converting the three-dimensional model into bending instructions.

In one embodiment, the user input comprises a list of anatomical locations representing the desired position of bracket bodies.

In one embodiment, the user input comprises a list of anatomical locations representing interproximal spaces.

In one embodiment, the computer program is further configured to verify the feasibility of the bending instructions and:

- if the instructions can be executed by the bending device:

    o generate a file comprising the bending instructions;
    o send the file comprising the bending instructions to the programmable controller;

- if the instructions cannot be executed by the bending device:

    o display an error message on the display of the human-machine interface.

In one embodiment, the file comprising the bending instructions is a derived form a .STL file corresponding to the desired archwire.

## THE METHOD

The present invention also relates to a method of manufacturing an orthodontic archwire with the orthodontic wire bending device 1 according to any one of the embodiments described hereinabove.

According to a first aspect, the manufacturing method comprises:

- guiding the wire through the wire guiding unit 2 in a first direction along the longitudinal axis, and delivering the wire out of the wire guiding unit 2 through the exit 22;

- feeding the wire bending unit 3 with the wire delivered from the exit 22; and

- rotating the wire bending member 31, 32 of a predefined angle $\alpha$ around the center of rotation C so as to bend the wire.

Feeding step and rotating step may be repeated until a full orthodontic archwire is obtained.

For an orthodontic wire bending device 1 comprising one bending member 31, 32, the angle $\alpha$ may be up to 360°.

For an orthodontic wire bending device 1 comprising two bending member 31, 32, the angle $\alpha$ is smaller than 360°.

According to a second aspect, the method is a method for designing and manufacturing an orthodontic archwire, the method comprising:

- receiving radiological images representing the dentition of a subject;
- generating a digital representation of the subject dentition, on the basis of the radiological images;
- receiving a user input;
- generate a three-dimensional model of a custom orthodontic archwire, on the basis of the three-dimensional model of the subject dentition and the user input;
- converting the three-dimensional model into bending instructions;
- creating a file comprising the bending instructions;
- sending the file comprising the bending instructions to a programmable controller of the orthodontic bending device 1; and
- operating, by means of the programmable controller, a driver assembly comprising at least a first driver 213 operably connected to the wire guiding unit 2 and configured to drive the wire in the guiding unit, and a second driver 35 operably connected to the wire bending unit 3 and configured to drive in rotation the two bending members 32,33, on the basis of the bending instructions in the file;

wherein the steps of the method are computer-implemented.

As aforementioned, the convoying system 21 may be capable of rotating about the longitudinal axis. In this embodiment, the programmable controller may further operate a driver 216 configured to drive in rotation said convoying system 21.

The present orthodontic archwire manufacturing method allows to:

a) advance the wire along a first direction parallel to the longitudinal axis;
b) rotate the wire about the longitudinal axis;
c) bend the wire;

and to perform a), b) and c) in a succession or simultaneously.

According to a third aspect, the method of the present invention is further for cutting an archwire manufactured with the orthodontic bending device 1.

The cutting of the archwire comprises:

- rotating a cutting member 34 having a flat surface 341 around the center of rotation C, so as to bring the cutting member in contact with the archwire at the exit 22;
- further rotating the cutting member 34 such that a sharp edge of the flat surface 341 slides on the exit 22, thereby cutting the archwire.

The rotation of the cutting member 34 which allows to cut the archwire is better shown in **figure 12**.

In the embodiment of **figure 12**, the bending members 31, 32 and the cutting member 34 are mounted on the same rotating plate 33. Alternatively, each of the bending members 31, 32 and the cutting member 34 may be mounted on an independent rotating support.

In this example, a clockwise rotation of the plate 33 comprising the bending members 31, 32 provides the last bending (**figure 12A**) to the wire w. Next, a second clockwise rotation brings the cutting member 34 in contact with the wire w (**figure 12B**). As shown in **figure 12B**, the flat surface 341 of the cutting member 34 is tangential to the exit 22, and it allows to cut the wire.

As illustrated in **figure 13**, the cutting member 34 allows to cut of the wire w precisely, and without damaging it.

While various embodiments have been described and illustrated, the detailed description is not to be construed as being limited hereto. Various modifications can be made to the embodiments by those skilled in the art without departing from the scope of the invention as defined by the claims.

**BRIEF DESCRIPTION OF THE DRAWINGS**

Figure 1 illustrates a 50X magnification of a bent portion of a wire obtained with the orthodontic wire bending device of the prior art (**figure 1A**) and that of a wire obtained with the present orthodontic wire bending device 1 (**figure 1B**). The white arrow indicates a surface defect of the wire obtained with a device of the prior art.

Figure 2 represents a perspective view of an exemplary orthodontic wire bending system comprising the orthodontic wire bending device 1 with a wire guiding unit 2 and a wire bending unit 3, the wire guiding unit comprising a convoying system 21, the orthodontic wire bending system further comprising: a human-machine interface including a display and a knob; a recovery box mounted in front of the bending unit 3; and a frame.

Figure 3 is a perspective view of the wire guiding unit 2 of the present invention according to a particular embodiment in which wire guiding unit 2 comprises:

- a tube 214,
- a convoying system 21 comprising a pair of rollers 211, 212 mounted on a support 217, and a first driver 213 for driving the rollers 211, 212 in rotation,
- a hollow body 218, and
- an exit 22;

wherein the convoying system 21 can be driven in rotation about the longitudinal axis by a belt and pulley assembly 215 connected to a second driver 216, and wherein the exit 22 is a nozzle comprising a prism shaped portion and a conical portion.

**Figure 4** is a perspective view of the wire guiding unit 2 and the wire bending unit 3 according to one embodiment in which the convoying system 21 is capable of rotating about the longitudinal axis of an angle up to 180°. In **figure 4A**, said convoying system 21 is rotated of 90° (from the reference position of **figure 3**), and in **figure 4B** the rotation angle is equal to 180°.

**Figure 5A** is a perspective view of the exit 22 of the wire guiding unit 2 according to one embodiment in which the exit 22 is a nozzle having a circular inner surface, said circular inner surface being rounded.

**Figure 5B** is a magnified sectional view of the nozzle of **figure 5A** showing the round of the circular inner surface, said round having a constant radius of curvature r.

**Figure 6A** is a perspective view of the exit 22 of the wire guiding unit 2 according to one embodiment in which the exit 22 is a nozzle comprising a cylindrical base, a prism and a cone, and in which the inner surface of the nozzle has a squared cross-section and it comprises a bevel joining said inner surface with the outer surface of the nozzle. For intelligibility purposes, a magnified sectional view of the nozzle is provided in **figure 6B**; in which the bevel of the inner surface is illustrated, said bevel having a zero radius of curvature on the other two sides (top and bottom), and a non-zero radius of curvature $r_L$, $r_D$ on two opposite sides of the squared cross-section (left and right side), the radius of curvature of the left side $r_L$ being smaller than the radius of curvature of the right side $r_D$.

**Figure 7** is a perspective view illustrating the bending unit 3 of the present invention according to one particular embodiment in which the two wire bending members 31, 32 are rods perpendicularly protruding from a plate 33 capable of rotating around a vertical axis z, and wherein a driver 35 is configured to drive the plate 33 in rotation.

**Figure 8** is a schematic drawing representing a top view, on the plane P, of the wire guiding unit 2 and the wire bending unit 3 of the present device according to the first configuration (**figure 8A** and **figure 8B**) or the second configuration (**figure 8C**), in which a rotation of the wire bending members 31, 32 of an angle $\alpha$ around the center of rotation C results in the bending of the wire proximate to the exit 22 of an angle $\beta$, wherein the bending angle $\beta$ depends on (i) the angle $\alpha$, (ii) the distance R between the center of rotation C and each wire bending member 32, 33 and (iii) the distance d between the center of rotation C and the exit 22.

**Figure 9** illustrates a three-dimensional archwire obtained with the present invention; the arrows indicate the interproximal spaces.

**Figure 10** is a perspective view of the wire bending unit 3 and the distal portion of the wire guiding unit 2 according to a particular embodiment in which the wire guiding unit comprises an hollow body 218 configured to deliver the wire to the exit 22, and in which the bending members 31, 32 are mounted on a rotating plate 33 and have the shape of a composite solid comprising a first cylinder, a truncated cone, and a second cylinder in a succession, so that the diameter of the bending members 31, 32 progressively decrease along the protruding direction.

**Figure 11** represents a perspective view of the wire bending unit 3 according to a particular embodiment in which the wire bending unit 3 comprises two bending members 31, 32 and a cutting member 34 for cutting the wire w delivered by the exit 22.

**Figure 12** is a top view illustrating two successive positions of the wire bending members 31, 32 and the cutting member 34 of the embodiment of **figure 11**, during a clockwise rotation of the plate 33.

**Figure 13** illustrates a 50X magnification of an extremity of an archwire cut with the cutting member 34 of **figures 11** and **12**.

**Claims**

1. Orthodontic wire bending device (1) comprising:

   - a wire guiding unit (2) comprising a convoying system for driving the wire (w) and an exit (22) for delivering the wire (w), the wire guiding unit being configured to guide the wire in a first direction along a longitudinal axis through the exit (22), and
   - a wire bending unit (3) fed by the wire delivered by the exit (22), comprising at least one wire bending member (31, 32), the at least one wire bending member (31, 32) being able to turn around a center of rotation (C) in a first plane including the longitudinal axis, such that, when the wire comes out of the exit (22), a rotation of the at least one bending members (31, 32) around the center of rotation (C) results in the bending of the wire (w) proximate to the exit (22), wherein the exit (22) of the wire guiding unit (2) is located, along the first direction, beyond the center of rotation (C), and
   wherein the wire bending unit (3) comprises one bending member (31, 32) capable of a translation along a direction perpendicular to the first plane.

2. Orthodontic wire bending device according to claim **1**, wherein the exit (22) is a nozzle, preferably a removable nozzle.

3. Orthodontic wire bending device according to claim **1**, configured such that a rotation of the at least one bending member (31, 32) of an angle $\alpha$ results in the bending of the wire (w) after elastic recovery of an angle $\beta$ wherein the relationship between $\alpha$ and $\beta$ is given by equation (e1):

$$\tan(\beta) = \frac{\sin(\alpha)}{\cos(\alpha) - \frac{d}{R}} \quad (e1)$$

in which d is the distance between the center of rotation (C) and the exit (22), and R is the distance between the center of rotation (C) and the at least one wire bending member (31, 32).

4. Orthodontic wire bending device (1) according to any one of claims **1** to **3**, wherein the convoying system (21) is capable of rotating about the longitudinal axis, so as to rotate the wire (w) about the longitudinal axis.

5. Orthodontic wire bending device (1) according to any one of claims **1** to **4**, wherein the wire guiding unit (2) comprises a tube (214) configured to house and guide the wire (w).

6. Orthodontic wire bending device (1) according to claim **5**, wherein the tube (214) comprises:

   a. an external cover, preferably made up of a metal or alloy material and
   b. an inner sheath, preferably made up of a medical grade thermoplastic elastomer.

7. Orthodontic wire bending (1) device according to any one of claims **1** to **6**, wherein the exit (22) has an inner surface having an inner radius, an outer surface, and a bevel or round extending from the inner surface to outer surface, the bevel or round having a radius of curvature r which is equal or greater than the inner radius Dt/2, preferably equal or greater than the inner diameter Dt.

8. Orthodontic wire bending device (1) according to any one of claims **1** to **7**, wherein the wire bending unit (3) comprises a plate (33) capable of rotating about an axis of rotation perpendicular to the longitudinal axis, wherein the at least one bending member (31, 32) protrudes from said rotating plate (33).

9. Orthodontic wire bending device (1) according to any one of claims **1** to **8**, wherein the wire guiding unit (2) comprises a hollow body (218) having a proximal end and a distal end, the hollow body (218) being non-rotatably connected to the convoying system (21) and being configured to receive, at its proximal end, the wire (w) from the convoying system (21) and to guide it along the first direction towards the wire bending unit (3).

10. Orthodontic wire bending device (1) according to any one of claims **1** to **9**, wherein the at least one bending member (31, 32) is a bending rod.

11. Orthodontic wire bending device (1) according to claim **10**, wherein the bending rod has a diameter which decreases along the protruding direction, preferably the rod comprises a first part of frustoconical shape and a second free part of cylindrical shape.

12. Orthodontic wire bending device according to any one of claims **1** to **11**, wherein the wire bending unit (3) further comprises a wire cutting member (34), preferably the wire cutting member (34) is a rod having a flat surface (341).

13. Orthodontic wire bending device according to claim **1** to **12**, wherein the wire bending unit (3) comprises one bending member (31, 32), preferably capable of a rotation around a center of rotation (C) of at least180°, preferably at least 200°.

14. Orthodontic wire bending device according to claim **13**, wherein the convoying system (21) is capable of a rotation about the longitudinal axis larger than 180°, preferably larger than 360°, so as to provide a second order bending.

15. Orthodontic wire bending device according to any one of claims **1** to **11**, wherein the wire bending unit (3) comprises two bending members (31, 32), preferably separated by an angular distance comprised between 10° and 170°, more preferably between 45° and 120°, even more preferably, equal to 90°.

16. Orthodontic wire bending device according to claim **15**, wherein the convoying system (21) is capable of a rotation about the longitudinal axis of an angle comprised between 0° and 180°, so as to provide a second order bending.

17. Orthodontic wire bending system comprising:

   a. an orthodontic wire bending device (1) according to any one of claims **1** to **16**, the orthodontic wire bending device (1) being responsive to control commands;
   b. a driver assembly comprising a first driver (213) operably connected to the wire guiding unit (2) and configured to drive the wire in the guiding unit, and a second driver (35) operably connected to the wire bending unit (3) configured to drive in rotation the at least one bending member (31, 32); and
   c. a programmable controller configured to send control commands to the drivers of the driver assembly, so as to operate the orthodontic bending device (1).

18. Orthodontic wire bending system according to claim **17**, further comprising a wire detection unit for detecting the presence of the wire (w), said wire detection unit being preferably installed between the exit of the wire guiding unit (2) and the wire bending unit (3).

19. A method of manufacturing an orthodontic archwire with the orthodontic wire bending device (1) according to any one of claims **1** to **16**, the method comprising:

- guiding the wire (w) through the wire guiding unit (2) in a first direction along the longitudinal axis, and delivering the wire (w) out of the wire guiding unit (2) through the exit (22);
- feeding the wire bending unit (3) with the wire (w) delivered from the exit (22); and
- rotating the at least one bending member (31, 32) of a predefined angle α around the center of rotation (C) so as to bend the wire (w).

**Patentansprüche**

1. Vorrichtung (1) zum Biegen von kieferorthopädischen Drähten, umfassend:

- eine Drahtführungseinheit (2), die ein Fördersystem zum Antreiben des Drahts (w) und einen Ausgang (22) zum Abgeben des Drahts (w) umfasst, wobei die Drahtführungseinheit so konfiguriert ist, dass sie den Draht in einer ersten Richtung entlang einer Längsachse durch den Ausgang (22) führt, und
- eine Drahtbiegeeinheit (3), die mit dem durch den Ausgang (22) abgegebenen Draht gespeist wird, die mindestens ein Drahtbiegeelement (31, 32) umfasst, wobei das mindestens eine Drahtbiegeelement (31, 32) in der Lage ist, sich um einen Drehpunkt (C) in einer ersten Ebene, die die Längsachse beinhaltet, derart zu drehen, dass, wenn der Draht aus dem Ausgang (22) herauskommt, eine Drehung des mindestens einen Biegeelements (31, 32) um den Drehpunkt (C) zum Biegen des Drahts (w) nahe des Ausgangs (22) führt, wobei sich der Ausgang (22) der Drahtführungseinheit (2) entlang der ersten Richtung jenseits des Drehpunkts (C) befindet, und wobei die Drahtbiegeeinheit (3) ein Biegeelement (31, 32) umfasst, das zu einer Verschiebung entlang einer Richtung senkrecht zur ersten Ebene fähig ist.

2. Vorrichtung zum Biegen von kieferorthopädischen Drähten nach Anspruch **1**, wobei der Ausgang (22) eine Düse, bevorzugt eine abnehmbare Düse, ist.

3. Vorrichtung zum Biegen von kieferorthopädischen Drähten nach Anspruch **1**, die derart konfiguriert ist, dass eine Drehung des mindestens einen Biegeelements (31, 32) um einen Winkel α zum Biegen des Drahts (w) nach elastischer Rückstellung um einen Winkel β führt, wobei die Beziehung zwischen α und β durch die Gleichung (e1) gegeben ist:

$$\tan(\beta) = \frac{\sin(\alpha)}{\cos(\alpha) - \frac{d}{R}} \quad (e1)$$

wobei d der Abstand zwischen dem Drehpunkt (C) und dem Ausgang (22) ist und R der Abstand zwischen dem Drehpunkt (C) und dem mindestens einen Drahtbiegeelement (31, 32) ist.

4. Vorrichtung (1) zum Biegen von kieferorthopädischen Drähten nach einem der Ansprüche **1** bis **3**, wobei das Fördersystem (21) fähig ist, sich um die Längsachse zu drehen, um den Draht (w) um die Längsachse zu drehen.

5. Vorrichtung (1) zum Biegen von kieferorthopädischen Drähten nach einem der Ansprüche **1** bis **4**, wobei die Drahtführungseinheit (2) ein Rohr (214) umfasst, das so konfiguriert ist, dass es den Draht (w) beherbergt und führt.

6. Vorrichtung (1) zum Biegen von kieferorthopädischen Drähten nach Anspruch **5**, wobei das Rohr (214) umfasst:

a. eine äußere Abdeckung, die bevorzugt aus einem Metall oder einem Legierungsmaterial besteht, und
b. eine innere Hülle, die bevorzugt aus einem thermoplastischen Elastomer medizinischer Güte besteht.

7. Vorrichtung (1) zum Biegen von kieferorthopädischen Drähten nach einem der Ansprüche **1** bis **6**, wobei der Ausgang (22) eine Innenfläche, die einen Innenradius aufweist, eine Außenfläche und eine Abschrägung oder Rundung aufweist, die sich von der Innenfläche zur Außenfläche erstreckt, wobei die Abschrägung oder Rundung einen Krümmungsradius r aufweist, der gleich dem oder größer als der Innenradius Dt/2, bevorzugt gleich dem oder größer als der Innendurchmesser Dt ist.

8. Vorrichtung (1) zum Biegen von kieferorthopädischen Drähten nach einem der Ansprüche **1** bis **7**, wobei die Drahtbiegeeinheit (3) eine Platte (33) umfasst, die fähig ist, sich um eine zur Längsachse senkrechte Drehachse zu drehen, wobei das mindestens eine Biegeelement (31, 32) von der sich drehenden Platte (33) vorspringt.

9. Vorrichtung (1) zum Biegen von kieferorthopädischen Drähten nach einem der Ansprüche **1** bis **8**, wobei die Drahtführungseinheit (2) einen Hohlkörper (218) umfasst, der ein proximales Ende und ein distales Ende aufweist, wobei der Hohlkörper (218) nicht drehbar mit dem Fördersystem (21) verbunden ist und so konfiguriert ist, dass er an seinem proximalen Ende den Draht (w) vom Fördersystem (21) aufnimmt und ihn entlang der ersten Richtung zur Drahtbiegeeinheit (3) hin führt.

10. Vorrichtung (1) zum Biegen von kieferorthopädischen Drähten nach einem der Ansprüche **1** bis **9**, wobei das mindestens eine Biegeelement (31, 32) ein Biegestab ist.

11. Vorrichtung (1) zum Biegen von kieferorthopädischen Drähten nach Anspruch **10**, wobei der Biegestab einen Durchmesser aufweist, der entlang der Vorsprungsrichtung abnimmt, bevorzugt wobei der Stab einen ersten Teil mit kegelstumpfförmiger Form und einen zweiten freien Teil mit zylindrischer Form umfasst.

12. Vorrichtung zum Biegen von kieferorthopädischen Drähten nach einem der Ansprüche **1** bis **11**, wobei die Drahtbiegeeinheit (3) weiter ein Drahtschneideelement (34) umfasst, bevorzugt wobei das Drahtschneideelement (34) ein Stab ist, der eine flache Fläche (341) aufweist.

13. Vorrichtung zum Biegen von kieferorthopädischen Drähten nach Anspruch **1** bis **12**, wobei die Drahtbiegeeinheit (3) ein Biegeelement (31, 32) umfasst, das bevorzugt zu einer Drehung von mindestens 180°, bevorzugt mindestens 200°, um einen Drehpunkt (C) fähig ist.

14. Vorrichtung zum Biegen von kieferorthopädischen Drähten nach Anspruch **13**, wobei das Fördersystem (21) zu einer Drehung von mehr als 180°, bevorzugt mehr als 360°, um die Längsachse fähig ist, um eine Biegung zweiter Ordnung bereitzustellen.

15. Vorrichtung zum Biegen von kieferorthopädischen Drähten nach einem der Ansprüche **1** bis **11**, wobei die Drahtbiegeeinheit (3) zwei Biegeelemente (31, 32) umfasst, die bevorzugt um einen Winkelabstand im Bereich zwischen 10° und 170°, bevorzugter zwischen 45° und 120°, noch bevorzugter gleich 90°, getrennt sind.

16. Vorrichtung zum Biegen von kieferorthopädischen Drähten nach Anspruch **15**, wobei das Fördersystem (21) zu einer Drehung um einen Winkel im Bereich zwischen 0° und 180° um die Längsachse fähig ist, um eine Biegung zweiter Ordnung bereitzustellen.

17. System zum Biegen von kieferorthopädischen Drähten, umfassend:

    a. eine Vorrichtung (1) zum Biegen von kieferorthopädischen Drähten nach einem der Ansprüche **1** bis **16**, wobei die Vorrichtung (1) zum Biegen von kieferorthopädischen Drähten auf Steuerbefehle reagiert;
    b. eine Antriebsanordnung, die einen ersten Antrieb (213), der mit der Drahtführungseinheit (2) wirkverbunden und so konfiguriert ist, dass er den Draht in der Führungseinheit antreibt, und einen zweiten Antrieb (35) umfasst, der mit der Drahtbiegeeinheit (3) wirkverbunden und so konfiguriert ist, dass er das mindestens eine Biegeelement (31, 32) drehend antreibt; und
    c. eine programmierbare Steuerung, die so konfiguriert ist, dass sie Steuerbefehle an die Antriebe der Antriebsanordnung sendet, um die kieferorthopädische Biegevorrichtung (1) zu betreiben.

18. System zum Biegen von kieferorthopädischen Drähten nach Anspruch **17**, das weiter eine Drahterkennungseinheit zum Erkennen des Vorhandenseins des Drahts (w) umfasst, wobei die Drahterkennungseinheit bevorzugt zwischen dem Ausgang der Drahtführungseinheit (2) und der Drahtbiegeeinheit (3) installiert ist.

19. Verfahren zum Herstellen eines kieferorthopädischen Bogendrahts mit der Vorrichtung (1) zum Biegen von kieferorthopädischen Drähten nach einem der Ansprüche **1** bis **16**, wobei das Verfahren umfasst:

    - Führen des Drahts (w) in einer ersten Richtung entlang der Längsachse durch die Drahtführungseinheit (2) und Abgeben des Drahts (w) durch den Ausgang (22) aus der Drahtführungseinheit (2) heraus;
    - Speisen der Drahtbiegeeinheit (3) mit dem aus dem Ausgang (22) abgegebenen Draht (w); und
    - Drehen des mindestens einen Biegeelements (31, 32) um einen vordefinierten Winkel $\alpha$ um den Drehpunkt (C), um den Draht (w) zu biegen.

**Revendications**

1. Dispositif de pliage de fil orthodontique (1) comprenant :

- une unité de guidage de fil (2) comprenant un système de convoyage pour entraîner le fil (w) et une sortie (22) pour délivrer le fil (w), l'unité de guidage de fil étant configurée pour guider le fil dans une première direction le long d'un axe longitudinal à travers la sortie (22), et
- une unité de pliage de fil (3) alimentée par le fil délivré par la sortie (22), comprenant au moins un élément de pliage de fil (31, 32), l'au moins un élément de pliage de fil (31, 32) étant apte à tourner autour d'un centre de rotation (C) dans un premier plan incluant l'axe longitudinal, de telle sorte que, lorsque le fil sort de la sortie (22), une rotation de l'au moins un élément de pliage (31, 32) autour du centre de rotation (C) entraîne le pliage du fil (w) à proximité de la sortie (22), dans lequel la sortie (22) de l'unité de guidage de fil (2) est située, le long de la première direction, au-delà le centre de rotation (C), et dans lequel l'unité de pliage de fil (3) comprend un élément de pliage (31, 32) capable d'une translation selon une direction perpendiculaire au premier plan.

2. Dispositif de pliage de fil orthodontique selon la revendication 1, dans lequel la sortie (22) est une buse, de préférence une buse amovible.

3. Dispositif de pliage de fil orthodontique selon la revendication 1, configuré de telle sorte qu'une rotation du ou des éléments de pliage (31, 32) d'un angle $\alpha$ entraîne le pliage du fil (w) après récupération élastique d'un angle $\beta$, la relation entre $\alpha$ et $\beta$ étant donnée par l'équation (e1) :

$$\tan(\beta) = \frac{sin(\alpha)}{\cos(\alpha) - \frac{d}{R}} \quad (e1)$$

dans laquelle d est la distance entre le centre de rotation (C) et la sortie (22), et R est la distance entre le centre de rotation (C) et au moins un élément de cintrage de fil (31, 32).

4. Dispositif de pliage de fil orthodontique (1) selon l'une quelconque des revendications 1 à 3, dans lequel le système de convoyage (21) est capable de tourner autour de l'axe longitudinal, de manière à faire tourner le fil (w) autour de l'axe longitudinal.

5. Dispositif de pliage de fil orthodontique (1) selon l'une quelconque des revendications 1 à 4, dans lequel l'unité de guidage de fil (2) comprend un tube (214) configuré pour loger et guider le fil (w).

6. Dispositif de pliage de fil orthodontique (1) selon la revendication 5, dans lequel le tube (214) comprend : a. un revêtement externe, de préférence constitué d'un matériau métallique ou d'alliage et b. une gaine interne, de préférence constituée d'un élastomère thermoplastique de qualité médicale.

7. Dispositif de cintrage de fil orthodontique (1) selon l'une quelconque des revendications 1 à 6, dans lequel la sortie (22) présente une surface intérieure ayant un rayon intérieur, une surface extérieure et un biseau ou un rond s'étendant de la surface intérieure à la surface extérieure, le biseau ou le rond ayant un rayon de courbure r qui est égal ou supérieur au rayon intérieur Dt/2, de préférence égal ou supérieur au diamètre intérieur Dt.

8. Dispositif de cintrage de fil orthodontique (1) selon l'une quelconque des revendications 1 à 7, dans lequel l'unité de pliage de fil (3) comprend une plaque (33) capable de tourner autour d'un axe de rotation perpendiculaire à l'axe longitudinal, dans lequel le ou les éléments de pliage de fil (31, 32) font saillie à partir de ladite plaque rotative (33).

9. Dispositif de cintrage de fil orthodontique (1) selon l'une quelconque des revendications 1 à 8, dans lequel l'unité de guidage de fil (2) comprend un corps creux (218) ayant une extrémité proximale et une extrémité distale, le corps creux (218) étant relié de manière non rotative au système de convoyage (21) et étant configuré pour recevoir, à son extrémité proximale, le fil (w) provenant du système de convoyage (21) et pour le guider le long de la première direction vers l'unité de cintrage de fil (3).

10. Dispositif de cintrage de fil orthodontique (1) selon l'une quelconque des revendications 1 à 9, dans lequel le ou les éléments de pliage de fil (31, 32) sont une tige de cintrage.

11. Dispositif de cintrage de fil orthodontique (1) selon la revendication 10, dans lequel la tige de cintrage a un diamètre qui diminue le long de la direction de saillie, de préférence la tige comprend une première partie de forme tronconique et une seconde partie libre de forme cylindrique.

12. Dispositif de pliage de fils orthodontiques selon l'une quelconque des revendications 1 à 11, dans lequel l'unité de pliage de fils (3) comprend en outre un élément de coupe de fils (34), de préférence l'élément de coupe de fils (34) est une tige ayant une surface plate (341).

13. Dispositif de pliage de fils orthodontiques selon la revendication 1 à 12, dans lequel l'unité de pliage de fils (3) comprend un élément de pliage (31, 32), de préférence capable d'une rotation autour d'un centre de rotation (C) d'au moins 180°, de préférence d'au moins 200°.

**14.** Dispositif de pliage de fils orthodontiques selon la revendication 13, dans lequel le système de convoyage (21) est capable d'une rotation autour de l'axe longitudinal supérieure à 180°, de préférence supérieure à 360°, de manière à fournir une flexion de second ordre.

**15.** Dispositif de cintrage de fils orthodontiques selon l'une quelconque des revendications 1 à 11, dans lequel l'unité de cintrage de fils (3) comprend deux éléments de pliage de fil (31, 32), de préférence séparés par une distance angulaire comprise entre 10° et 170°, plus préférablement entre 45° et 120°, encore plus préférablement, égale à 90°.

**16.** Dispositif de cintrage de fils orthodontiques selon la revendication 15, dans lequel le système de convoyage (21) est capable d'une rotation autour de l'axe longitudinal d'un angle compris entre 0° et 180°, de manière à fournir un cintrage de second ordre.

**17.** Système de cintrage de fils orthodontiques comprenant :

    - un dispositif de cintrage de fils orthodontiques (1) selon l'une quelconque des revendications 1 à 16, le dispositif de cintrage de fils orthodontiques (1) étant sensible à des commandes de contrôle ;
    - un ensemble d'entraînement comprenant un premier entraînement (213) relié de manière opérationnelle à l'unité de guidage de fil (2) et configuré pour entraîner le fil dans l'unité de guidage, et un second entraînement (35) relié de manière opérationnelle à l'unité de pliage de fil (3) configuré pour entraîner en rotation le ou les éléments de pliage (31, 32) ; et
    - un contrôleur programmable configuré pour envoyer des commandes de commande aux entraînements de l'ensemble d'entraînement, de manière à faire fonctionner le dispositif de pliage orthodontique (1).

**18.** Système de pliage de fil orthodontique selon la revendication 17, comprenant en outre une unité de détection de fil pour détecter la présence du fil (w), ladite unité de détection de fil étant de préférence installée entre la sortie de l'unité de guidage de fil (2) et l'unité de pliage de fil (3).

**19.** Procédé de fabrication d'un arc orthodontique avec le dispositif de pliage de fil orthodontique (1) selon l'une quelconque des revendications 1 à 18, le procédé comprenant :

    - guider le fil (w) à travers l'unité de guidage de fil (2) dans une première direction le long de l'axe longitudinal, et faire sortir le fil (w) de l'unité de guidage de fil (2) par la sortie (22) ;
- alimenter l'unité de pliage de fil (3) avec le fil (w) délivré par la sortie (22) ; et
- faire tourner le ou les éléments de pliage (31, 32) d'un angle prédéfini $\alpha$ autour du centre de rotation (C) de manière à plier le fil (w).

PRIOR ART

1A

1B

**FIG. 1**

1

21

2

3

**FIG. 2**

**FIG. 3**

**4A**

**4B**

**FIG. 4**

FIG. 5

FIG. 6

**FIG. 7**

**8A**

**8B**

**8C**

**FIG. 8**

**FIG. 9**

**FIG. 10**

**FIG. 11**

**FIG. 13**

**12A**

**12B**

**FIG. 12**

**EP 4 284 293 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20200074640 A
- US 20170312808 A1
- US 20060107720 A
- WO 2019235796 A